# EUROPÄISCHE PATENTSCHRIFT

(11) **EP 1 049 918 B1**
(45) Veröffentlichungstag und Bekanntmachung des Hinweises auf die Patenterteilung: **04.08.2004**
(21) Anmeldenummer: 99907244.0
(22) Anmeldetag: 16.01.1999
(51) Int. Cl.: G01M 3/20

(54) **VERFAHREN UND VORRICHTUNG ZUM PRÜFEN DER GASDICHTIGKEIT EINES STEHEND VERANKERTEN, GASFÜHRENDEN MASTES FÜR INSBESONDERE BELEUCHTUNGSZWECKE**
METHOD AND DEVICE FOR TESTING THE GAS-PROOFNESS OF A GAS-CONTAINING MAST ANCHORED UPRIGHT, ESPECIALLY FOR ILLUMINATION PURPOSES
PROCEDE ET DISPOSITIF POUR VERIFIER L'ETANCHEITE AUX GAZ D'UN MAT A GAZ ANCRE DEBOUT, SERVANT NOTAMMENT A DES FINS D'ECLAIRAGE

(30) Priorität: 24.01.1998 DE 19802694
(43) Veröffentlichungstag der Anmeldung: 08.11.2000
(73) Patentinhaber: Roch, Oliver, 23623 Gnissau (DE); Roch, Mathias, 23566 Lübeck (DE)
(72) Erfinder: Roch, Oliver, 23623 Gnissau (DE); Roch, Mathias, 23566 Lübeck (DE)
(74) Vertreter: Wilcken, Thomas, Dipl.-Ing.
(86) Internationale Anmeldenummer: PCT/DE1999/000091
(87) Internationale Veröffentlichungsnummer: WO 1999/037984

(56) Entgegenhaltungen:
- US-A- 5 212 654

## Beschreibung

Die Erfindung betrifft ein Verfahren und eine Vorrichtung zum Prüfen der Gasdichtigkeit eines stehend verankerten, gasführenden Mastes für insbesondere Beleuchtungszwecke.

Bei einem bekannten Verfahren zum Prüfen von Hohlmasten geht man so vor. daß der zu prüfende Mast zum Feststellen seiner Standfestigkeit oberhalb seiner Erdbodenverankerung mit einer Biegekraft belastet und anschließend davon wieder entlastet wird. Die dabei kontinuierlich angewendeten Belastungskräfte und die zugehörigen Auslenkungen werden gemessen und zueinander in Beziehung gesetzt. so daß eine erste Kennlinie entsteht. Ebenfalls werden beim Entlastungsvorgang die abnehmenden Kräfte und die zugehörigen Auslenkungen fortlaufend gemessen und ebenfalls zueinander in Beziehung gesetzt, so daß eine zweite Kennlinie erhalten wird. Aus einem Vergleich der beiden Kennlinien wird geschlossen, ob der geprüfte Hohlmast mit einem seine Standfestigkeit beeinträchtigenden Schaden behaftet ist, z.B. mit einem Riß. Ein Riß gefährdet nicht nur die Standfestigkeit des Hohlmastes, sondern führt bei Hohlmasten, die ein Brenngas für den Betrieb einer Gasstraßenlampe an ihrem Oberende führen, dazu, daß ein Gasanteil aus dem Mast austritt, wenn der Mast z. B. Windbelastungen ausgesetzt ist, wodurch ein Riß in der Wandung des Hohlmastes mehr oder weniger geöffnet wird, so daß das Brenngas in die Umgebung austreten und zu Folgeschäden führen kann. Ist ein Rißschaden an einem gasführenden Hohlmast festgestellt worden, so muß der Hohlmast in der Regel schon aus Gründen der Standfestigkeit ausgewechselt werden.

Das vorgenannte Prüfverfahren hat sich im allgemeinen für die Maststandfestigkeitsprüfung bewährt, wie z.B. offenbart in US-A-5 212 654. Bei der Durchführung des Verfahrens muß sehr sorgfältig vorgegangen werden, um ausreichend genaue Werte für die Kräfte und zugehörigen Auslenkungen zu messen, um daraus wiederum aussagefähige Kennlinien ableiten zu können, die auf einen Riß in der Wand des Hohlmastes sicher hindeuten. Insbesondere wenn sich die Mastschädigung noch in einem Anfangsstadium befindet, ist ein Riß oft so klein, daß er mit dem vorgenannten Verfahren nicht oder nicht sicher festgestellt werden kann. weil die ermittelten Kennlinien für die Belastung und Entlastung des Mastes praktisch identisch sind und insbesondere keine solche Abweichung voneinander aufweisen, die auf einen Rißschaden hindeutet. Gleichwohl führt ein schon kleiner Riß zu einem nicht unbedenklichen Gasaustritt insbesondere bei Windbelastung des Mastes.

Die Aufgabe der Erfindung besteht in der Schaffung eines Verfahrens und einer Vorrichtung zum Prüfen eines stehend verankerten, gasführenden Mastes für insbesondere Beleuchtungszwecke, um sicher festzustellen, ob der gasführende Mast bei Biegebelastungen während seines Betriebs gasdicht ist.

Die Lösung dieser Aufgabe ist in den Ansprüchen 1 und 5 angegeben.

Mit der erfindungsgemäßen Lösung ist es auf einfache Weise möglich, bei gasführenden Masten. insbesondere Hohlmasten für Beleuchtungszwecke, vorhandene Gasdefekte, z. B. aufgrund kleinster Rißschäden, sicher festzustellen. die insbesondere bei Windbelastung des Mastes zu einem Gasaustritt aus dem gasführenden Bereich als Mastes in die Umgebung führen. ohne daß der Mast hereits in seiner Standfestigkeit gefährdet ist. Das erfindungsgemäße Verfahren ist gegenüber dem erwähnten vorbekannten Verfahren. das zur Feststellung eines Schadens auf einem Vergleich von ermittelten Biegekennlinien basiert, wesentlich empfindlicher und genauer, und auch die Vorrichtung zur Durchführung des Verfahrens ist von einfachem Aufbau und von einfacher Handhabung. Ferner ist es mit der erfindungsgemäßen Lösung auch möglich, Dichtigkeitsschäden im Erdabschnitt des Mastes und im Gasanschlußbereich des Mastes unterhalb der Erdoberfläche festzustellen.

In einer vorteilhaften Ausgestaltung des erfindungsgemäßen Verfahrens wird der abgeschirmte Prüfraum vor dem Meßvorgang mit einem von dem Gas des Mastes verschiedenen Spülgas neutralisiert, um mögliche Fehlerquellen beim Austritt von Gas aus dem Mast zu vermeiden. Eventuell aus dem Mast ausgetretenes Brenngas kann nach seiner Feststellung mittels Symbolzeichen grafisch angezeigt werden. Alternativ oder zusätzlich ist es auch möglich, eine optische und/oder akustische Anzeige vorzusehen.

Eine vorteilhafte Ausgestaltung der Vorrichtung zur Durchführung des Verfahrens umfaßt eine Haube oder dergleichen aus einem gasdichten Planenmaterial, wobei die Haube beispielsweise eine Kegelform aufweisen kann. Die innerhalb der Haube vorgesehenen Gassensormittel können mit einem außerhalb der Haube vorgesehenen Monitor gekoppelt sein, auf dem Symbolzeichen oder andere grafische Zeichen anzeigbar sind, die auf den Gasaustritt hinweisen.

Weitere Vorteile der Erfindung gegeben sich aus der nachstehenden Beschreibung.

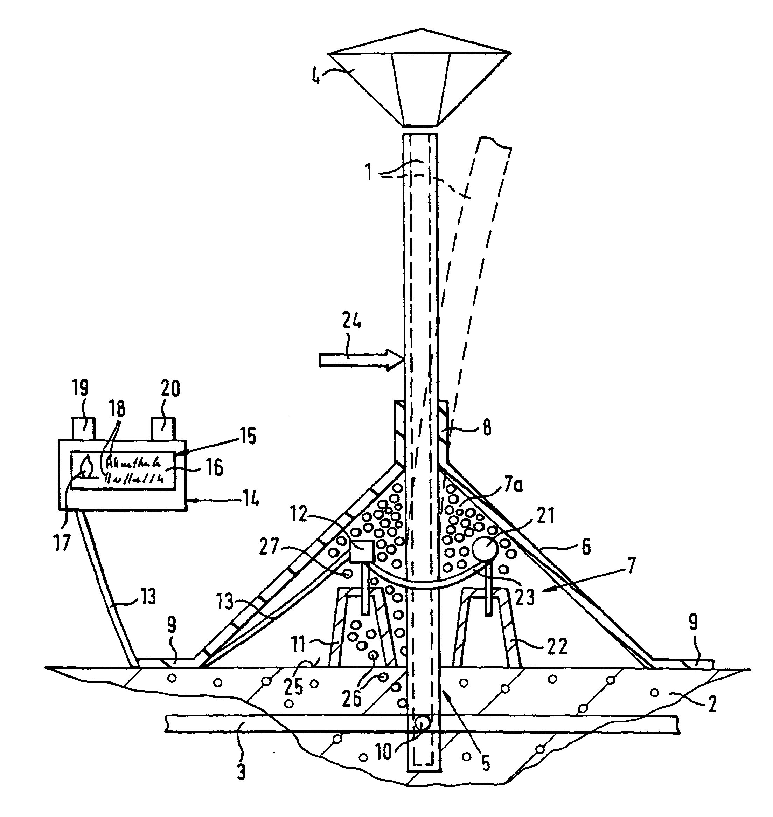

Die Erfindung ist nachstehend anhand eines in der anliegenden Zeichnung dargestellten Ausführungsbeispieles näher erläutert. In der einzigen Zeichnung ist der betriebsbereite Aufbau eines Ausführungsbeispiels der Vorrichtung schematisch dargestellt.

Ein Mast 1, z. B. ein Hohlmast, dessen Hohlraum über eine im Erdboden 2 verlegte Gasleitung 3 mit einem Brenngas versorgt wird. das beispielsweise zum Betrieb einer Gaslampe 4 am Oberende des Mastes zur Beleuchtung einer Straße oder eines Platzes verwendet wird, ist bei 5 im Erdboden stehend verankert. Ein solcher insbesondere für Beleuchtungszwecke eingesetzter Mast ist während seines Betriebes erheblichen Biegebelastungen insbesondere durch Windkräfte ausgesetzt. Durch diese Biegebelastungen wird der Mast insbesondere entlang seines unteren Abschnittes besonders belastet, so daß in diesem Bereich mit Rißschäden oder anderen Undichtigkeiten gerechnet werden muß, die zu einem Austritt des in dem Mast geführten Brenngases in die Umgebung führen.

Zum besseren Verständnis des Prüfverfahrens auf Undichtigkeit des Mastes ist zunächst eine Vorrichtung dafür erläutert. Diese umfaßt für die Feststellung eines Gasaustrittes aus einem Hohlmast eine Haube 6, Umhüllung, Gehäuse, Glocke oder dergleichen, im folgenden und in den Ansprüchen nur Haube zitiert im Sinne eines Gesamtbegriffes, zur Schaffung eines gasdichten Prüfraumes 7 um den gezeigten Hohlmast herum, die im gezeigten Fall den Mast unten mit Abstand zu ihm gegenüber dem Erdboden und oben in gewünschter Höhe abdichtet. Die Haube, die beispielsweise eine Kegelform aufweisen und zur Unterbringung von Meßeinrichtungen geöffnet und gasdicht geschlossen werden kann, weist an ihrem Oberende eine Dichtungsmanschette 8 und an ihrem unteren Umfangsrand einen Dichtungsflansch 9 auf. Die Manschette 8 und der Flansch 9 werden jeweils gasdicht am Mast und am Erdboden befestigt. Da der Dichtungsflansch 9 mit Abstand um die Mastverankerung verläuft, wird durch die Haube 6 auch ein gewisser Erdbodenbereich um den Mast herum durch die Haube zu Prüfzwecken erfaßt. Dadurch wird auch Brenngas erfaßt, welches aus dem Mastabschnitt austritt, der sich in der Mastverankerung 5 im Erdboden befindet. Dies kann beispielsweise die Anschlußstelle 10 sein, an welcher der Mast 1 im Erdboden mit der Erdgasleitung 3 verbunden ist, da diese Stelle ebenfalls Biegebelastungen unterworfen ist. wenn der Hohlmast durch Windkräfte hin und her schwenkt.

Die Haube 6 kann aus einem gasdichten Planenmaterial bestehen und ist vorzugsweise elastisch ausgebildet, um bei einer Biegeprüfbelastung des Mastes nachgeben zu können, ohne dabei defekt und/oder undicht zu werden. Wenn das Planenmaterial für die Haube relativ steif ist, kann so vorgegangen sein, daß in den Bereichen der Manschette 8 und/oder des Befestigungsflansches 9 formnachgiebige Ausbildungen vorgesehen sind, beispielsweise nach Art eines Faltenbalges. Desweiteren kann die Haube 6 auch mit einem Fenster versehen sein, um optische Erkennungsmittel für eine Gasfeststellung von außen wahrnehmen zu können, wie noch klar wird.

In dem durch die Haube 6 oder dergleichen geschaffenen Prüfraum 7 sind an einem Stativ 11 Gassensormittel 12 vorgesehen, die über eine Leitung 13 mit Anzeigemitteln 14 gekoppelt sind. Diese Anzeigemittel können beispielsweise aus einem Monitor 15 bestehen, der außerhalb der Haube 6 aufgestellt ist und auf dessen Anzeigefläche 16 grafische Symbole erscheinen, wenn mittels des Gassensors 12 ausgetretenes Brenngas festgestellt worden ist. Die Symbole können Piktogramme sein, z.B. ein Flammenzeichen 17, und/oder auch Wortangaben 18 und/oder auch Zahlenangaben. Welche grafischen Zeichen für die Anzeigefläche 16 gewählt werden, wird davon abhängen, wieviel Informationen beim Prüfvorgang erhalten werden sollen.

Zusätzlich zu den grafischen Informationen des Monitors 15 ist es auch möglich, diesen mit einer Anzeigelampe 19 und/oder einem Tongeber 20 zusätzlich auszustatten. Es ist aber auch möglich, die Lampe 19, z. B. in Form einer Blinkleuchte, und/oder den Tongeber 20 als äußere Erkennungsmittel allein aufzustellen und mit den Gassensormitteln 12 zu verbinden, wenn es im wesentlichen nur darauf ankommt, einen Gasaustritt als solchen festzustellen.

Als alternative Ausgestaltung zu den äußeren Erkennungsmitteln kann auch so vorgegangen werden, daß die Gassensormittel 12 mit inneren optischen und/oder akustischen Signalgebern 21 zusammengeschaltet sind, die an einem Gestell 22 innerhalb des Prüfraumes 7 der Haube 6 vorgesehen sind. Für den Fall des Vorsehens optischer Signalmittel ist die Haube 6 mit dem vorerwähnten Fenster (nicht gezeigt) ausgestattet. Alternativ kann das Planenmaterial durchscheinend oder durchsichtig ausgebildet sein, so daß die optischen Signale auch ohne ein besonderes Fenster der Haube 6 von außen wahrnehmbar sind. Aus der Zeichnungsfigur ist zu erkennen, daß im Falle der Verwendung innerer Signalmittel 21 diese über eine Leitung 23 mit den Gassensormitteln 12 verbunden sind.

Desweiteren ist eine schematisch durch einen Pfeil angedeutete Einrichtung 24 zum Biegebelasten des Hohlmastes 1 oberhalb der Haube 6 vorgesehen. Mit dieser Einrichtung wird der Hohlmast für eine gewünschte Zeit einer Biegekraft unterworfen, so daß er die strichpunktierte Lage einnimmt. Die Einrichtung 24 kann beispielsweise ein übliches Baggerfahrzeug sein, dessen Gelenkarm ein vorderes Greif- bzw. Drückwerkzeug aufweist, das an der gewünschten Stelle am Hohlmast 1 angreift und die erforderliche Kraft mittels eines Kraftzylinders aufbringt.

Die vorstehend beschriebene Vorrichtung ist so ausgebildet, daß auch Brenngas festgestellt wird, das aus einem Mastabschnitt entweicht, der in dem Verankerungsbereich 5 im Erdboden 2 verläuft, sowie aus dem Gasanschlußbereich 10 des Hohlmastes und auch aus einem Bereich der Erdgasleitung 3, der an die Anschlußstelle 10 angrenzt. Im Falle eines Dichtigkeitsdefektes dieser Bereiche wird das Gas zunächst den Erdboden 2 nach oben durchdringen und dann in den Prüfraum 7 gelangen. Insofern deckt der Prüfraum 7 auch einen Flächenbereich 25 des Erdbodens 2 um den Mast herum zu Prüfzwekken ab.

Wenn ein Gasaustritt aus dem Erdboden 2 in Erdbodennähe nicht erfaßt werden soll, kann alternativ auch so vorgegangen werden, daß die Haube 6 oder dergleichen an ihrem Unterende unter Bildung eines Prüfraumes 7 nahen der Erdfläche 25 oder höher dichtend am Mastfuß anliegt. Der Prüfraum 7 muß dann wenigstens eine solche Größe aufweisen, daß eine ausreichende Menge an ausgetretenem Brenngas für den Meßvorgang zur Verfügung steht und daß die Gassensormittel 12 untergebracht werden können. Ein solcher gasdichter Prüfraum kann beispielsweise eine zylindrische Form aufweisen und aus einem Gehäuse bestehen, das zwei Halbschalen umfaßt, so daß ein solches Gehäuse zu Prüfzwecken auf einfache Weise am Hohlmast angebracht werden kann.

Soweit es durch die Erläuterung der Vorrichtung schon klar geworden ist, ist zum vollständigen Verständnis des Verfahrens zum Prüfen der Gasdichtigkeit eines stehend verankerten, gasführenden Mastes nun die Funktion des gezeichneten und beschriebenen Ausführungsbeispieles ergänzend erläutert. Nachdem die Vorrichtung an dem zu prüfenden Hohlmast 1 abgedichtet installiert worden ist, wird mittels der Einrichtung 24 eine Biegekraft oberhalb der Mastverankerung bis zu höchstens einem Maximalwert auf den Hohlmast 1 aufgebracht.

Falls die Mastwand eine Undichtigkeit aufweist, z. B. in Form eines sehr kleinen oder auch größeren Risses, wobei diese Schädigungsstelle sich auch im gesamten Verankerungsbereich 5 oder in dessen Nähe befinden kann, treten an der Schädigungsstelle des Mastes Gasblasen 26 und/oder 27 aus, steigen nach oben und sammeln sich als größere Gasmenge im Oberbereich 7a des Prüfraumes 7. Da sich in dem Oberbereich 7a die Gassensormittel 12 befinden, wird das Vorhandensein von Gas festgestellt und ein entsprechendes elektrisches Signal z. B. an den äußeren Monitor 15 gegeben. Auf dessen Anzeigefläche 16 erscheinen nun die entsprechenden grafischen Symbole 17, 18 als Informationsanzeige von aus dem Hohlmast ausgetretenem Brenngas. Gleichzeitig können auch die optischen und/oder akustischen Signalgeber 19 bzw. 20 in Tätigkeit treten. Alternativ können die Gassensormittel 12 auch entsprechende Signale an die im Innern der Haube 6 bzw. im Prüfraum 7 befindlichen akustischen und/oder optischen Signalisierungsmittel 21 leiten.

Das Verfahren und die Vorrichtung zu dessen Durchführung eignen sich nicht nur für Hohlmasten, die in ihrem Innenraum ein Brenngas für eine Gaslampe führen, sondern auch für Vollmasten, z. B. aus Holz, an denen eine Gasrohrleitung montiert ist, die zu einem am Mastoberende befindlichen Gasverbraucher, z. B. eine Lampe oder eine Informationseinrichtung z. B. für Reklamezwecke, führt. Auch in diesem Fall wird der Mast zusammen mit der Gasrohrleitung einer Biegekraft unterworfen, wobei sich im Fall einer Undichtigkeit im abgeschirmten Abschnitt von Mast und Gasrohrleitung im Sammelbereich 7a des Prüfraumes 7 das aus der Rohrleitung entwichene Gas ansammelt und festgestellt werden kann.

Eine weitere Anwendung des beschriebenen Verfahrens und der beschriebenen Vorrichtung ist bei mastähnlichen, aufrechtstehend verankerten oder aufgestellten Gegenständen, die in ihrem Inneren ein Gas führen, gegeben. Zum Beispiel kommen stehende, sogenannte Gaslanzen zum Abfackeln von nicht weiter verwendeten, brennbaren Gasen infrage, die auf Gasdichtigkeit in ihrem unteren Bereich geprüft werden sollen. Des weiteren muß das Gas selbst nicht unbedingt ein brennbares oder ein gefährliches Gas sein. Auch diese oder hiermit vergleichbare Gegenstände sollen unter dem Begriff Mast verstanden werden.

## Patentansprüche

1. Verfahren zum Prüfen der Gasdichtigkeit eines stehend verankerten, gasführenden Mastes für insbesondere Beleuchtungszwecke, bei dem der Mast entlang eines Abschnittes gegenüber der Luftumgebung unter Bildung eines Prüfraumes gasdicht abgeschirmt und mit einer oberhalb seiner Verankerung einzuleitetenden, ansteigenden Biegekraft bis zu höchstens einem maximalen Wert belastet wird und bei dem während des Belastungsvorganges gegebenenfalls aus dem gasführenden Mast in den Prüfraum eingetretenes Gas sensitiv ermittelt und als Undichtigkeitsschaden des Mastes ausgewertet wird.

2. Verfahren nach Anspruch 1, **dadurch gekennzeichnet, daß** der abgeschirmte Prüfraum vor dem Prüfvorgang mit einem vom Gas des Mastes verschiedenen Spülgas neutralisiert wird.

3. Verfahren nach Anspruch 1 oder 2, **dadurch gekennzeichnet, daß** ermitteltes Gas mittels Symbolzeichen auf einem Monitor grafisch angezeigt wird.

4. Verfahren nach Anspruch 1, 2 oder 3, **dadurch gekennzeichnet, daß** ermitteltes Gas optisch und/oder akustisch wahrnehmbar gemacht wird.

5. Vorrichtung zum Prüfen der Gasdichtigkeit eines stehend verankerten, gasführenden Mastes für insbesondere Beleuchtungszwecke, zur Durchführung des Verfahrens nach einem der Ansprüche 1 bis 4, umfassend eine Einrichtung (24) zum Biegebelasten des Mastes (1) oberhalb seiner Verankerung (5), eine Haube (6) zur Schaffung eines gasdichten Prüfraumes (7) um den gasführenden Mast herum, Gassensormittel (12), die innerhalb des Prüfraumes (7) vorgesehen sind, für das Ermitteln des gegebenenfalls aus dem Mastbereich in den Prüfraum eingetretenen Gases und mit den Gassensormitteln (12) gekoppelte Anzeigemittel (14, 19, 20, 21) zum grafischen und/oder optischen und/oder akustischen Anzeigen von festgestelltem Gas.

6. Vorrichtung nach Anspruch 5, **dadurch gekennzeichnet, daß** die Haube (6), aus einem gasdichten Planenmaterial besteht.

7. Vorrichtung nach Anspruch 5 oder 6, **dadurch gekennzeichnet, daß** die Haube (6) eine Kegelform aufweist und einerseits am Erdboden mit Abstand um die Mastverankerung (5) herum und andererseits in einer vorbestimmten Höhe an dem zu prüfenden Mast (1) gasdicht anbringbar ist.

8. Vorrichtung nach Anspruch 5, 6 oder 7, **dadurch gekennzeichnet, daß** außerhalb der Haube (6) ein mit den Gassensormitteln (12) innerhalb der Haube gekoppelter Monitor (15) zum grafischen Anzeigen von festgestelltem Gas vorgesehen ist.

9. Vorrichtung nach Anspruch 8, **dadurch gekennzeichnet, daß** der Monitor (12) mit optischen und/oder akustischen Signalmitteln (19, 20) verbunden ist.

10. Vorrichtung nach Anspruch 5, 6 oder 7, **dadurch gekennzeichnet, daß** die Haube (6) wenigstens bereichsweise durchsichtig oder durchscheinend ist und daß innerhalb der Haube ein optisches Signalmittel (21) zum Darstellen von entwichenem Gas vorgesehen ist.

11. Vorrichtung nach Anspruch 5, 6 oder 7, **dadurch gekennzeichnet, daß** innerhalb der Haube (6) ein akustisches Signalmittel (21) zum Darstellen von entwichenem Gas vorgesehen ist.

## Claims

1. A method for testing the gas-tightness of a vertically anchored, gas-conducting mast, in particular for illumination purposes, with which the mast along a section is shielded in a gas-tight manner with respect to the air surroundings whilst forming a test space and is loaded with a bending force which is to be introduced above its anchoring and which increases up to at the most a maximal value, and with which gas which as the case may be has entered the test space from the gas-conducting mast during the test procedure is detected in a sensitive manner and is evaluated as leakage damage to the mast.

2. A method according to claim 1, **characterised in that** the shielded test space before the test procedure is neutralised with a rinsing gas which is different from the gas of the mast.

3. A method according to claim 1 or 2, **characterised in that** detected gas is graphically displayed on a monitor by way of symbol signs.

4. A method according to claim 1, 2 or 3, **characterised in that** detected gas is made perceivable in an optical and/or acoustic manner.

5. A device for testing the gas-tightness of a vertically anchored, gas-conducting mast, in particular for illumination purposes, for carrying out the method according to one of the claims 1 to 4, comprising a means (24) for loading the mast (1) in bending above its anchoring (5), a shroud (6) for creating a gas-tight test space (7) around the gas-conducting mast, gas sensor means (12) which are provided within the test space (7) for detecting the gas which as the case may be has entered into the test space from the mast region and with display means (14, 19, 20, 21) coupled to the gas sensor means (12) for the graphic and/or optical and/or acoustic displaying of the detected gas.

6. A device according to claim 5, **characterised in that** the shroud (6) consists of a gas-tight cover material.

7. A device according to claim 5 or 6, **characterised in that** the shroud (6) has a conical shape and, in a gas-tight manner, on the one end may be attached on the ground at a distance around the mast anchoring (5) and on the other end may be attached at a predefined height on the mast (1) to be checked.

8. A device according to claim 5, 6 or 7, **characterised in that** a monitor (15) for the graphical display of detected gas which is coupled to the gas sensor means (12) within the shroud (6) is provided outside the shroud (6).

9. A device according to claim 8, **characterised in that** the monitor (12) is connected to optical and/or acoustic signal means (19, 20).

10. A device according to claim 5, 6 or 7, **characterised in that** the shroud (6) is transparent or translucent and that an optical signal means (21) for representing escaped gas is provided within the shroud.

11. A device according to claim 5, 6, or 7, **characterised in that** an acoustic signal means (21) for representing escaped gas is provided within the shroud (6).

## Revendications

1. Procédé pour contrôler l'étanchéité aux gaz d'un mât conduisant du gaz ancré en position verticale, servant notamment à des fins d'éclairage, selon lequel le mât est, le long d'un tronçon, protégé en étanchéité aux gaz vis-à-vis de l'environnement atmosphérique, en formant un espace de contrôle, et est sollicité, au plus jusqu'à une valeur maximale, par une force de flexion ascendante à introduire au-dessus de son ancrage, et selon lequel, pendant le processus de sollicitation, le gaz éventuellement parvenu dans l'espace de contrôle en provenance du mât conduisant du gaz est décelé par détection, et interprété comme défaut d'étanchéité du mât.

2. Procédé selon la revendication 1, **caractérisé en ce que** l'espace protégé de contrôle est, avant le processus de contrôle, neutralisé avec un gaz de balayage différent du gaz du mât.

3. Procédé selon la revendication 1 ou 2, **caractérisé en ce que** le gaz décelé est affiché graphiquement sur un moniteur à l'aide de symboles.

4. Procédé selon la revendication 1, 2 ou 3, **caractérisé en ce que** le gaz décelé est signalé optiquement et/ou acoustiquement.

5. Dispositif pour contrôler l'étanchéité aux gaz d'un mât conduisant du gaz ancré en position verticale, servant notamment à des fins d'éclairage, pour la mise en oeuvre du procédé selon l'une des revendications 1 à 4, comprenant un équipement (24) pour solliciter en flexion le mât (1) au-dessus de son ancrage (5), un capot (6) pour créer un espace de contrôle (7) étanche aux gaz tout autour du mât conduisant du gaz, des moyens détecteurs de gaz (12) qui sont prévus à l'intérieur de l'espace de contrôle (7), pour déceler le gaz éventuellement parvenu dans l'espace de contrôle en provenance de la région du mât, et des moyens d'affichage (14, 19, 20, 21), accouplés aux moyens détecteurs de gaz (12), pour afficher graphiquement et/ou optiquement et/ou acoustiquement le gaz repéré.

6. Dispositif selon la revendication 5, **caractérisé en ce que** le capot (6) est constitué d'un matériau de bâche étanche aux gaz.

7. Dispositif selon la revendication 5 ou 6, **caractérisé en ce que** le capot (6) présente une forme conique et peut être fixé en étanchéité aux gaz, d'une part, au sol à distance tout autour de l'ancrage (5) du mât et, d'autre part, à une hauteur prédéfinie au mât (1) à contrôler.

8. Dispositif selon la revendication 5, 6 ou 7, **caractérisé en ce qu'**un moniteur (15), couplé aux moyens détecteurs de gaz (12) à l'intérieur du capot, est prévu à l'extérieur du capot (6) pour afficher graphiquement le gaz repéré.

9. Dispositif selon la revendication 8, **caractérisé en ce que** le moniteur (12) est relié à des moyens de signalisation (19, 20) optiques et/ou acoustiques.

10. Dispositif selon la revendication 5, 6 ou 7, **caractérisé en ce que** le capot (6) est au moins sectoriellement transparent ou translucide, et **en ce qu'**un moyen de signalisation optique (21) est prévu à l'intérieur du capot pour indiquer le gaz qui s'est échappé.

11. Dispositif selon la revendication 5, 6 ou 7, **caractérisé en ce qu'**un moyen de signalisation acoustique (21) est prévu à l'intérieur du capot (6) pour indiquer le gaz qui s'est échappé.
